Europäisches Patentamt

(19) European Patent Office

Office européen des brevets

(11) Numéro de publication: **0 023 183**

A1

(12) # DEMANDE DE BREVET EUROPEEN

(21) Numéro de dépôt: **80401088.2**

(22) Date de dépôt: **22.07.80**

(51) Int. Cl.³: **F 16 C 1/26**

(30) Priorité: **23.07.79 FR 7918932**

(43) Date de publication de la demande:
**28.01.81 Bulletin 81/4**

(84) Etats Contractants Désignés:
**DE GB IT**

(71) Demandeur: **SEIM-ROTIN**
**41,43, Avenue Emile Zola**
**F-26103 Romans(FR)**

(72) Inventeur: **Bergero, Alphonse**
**"Ledevienne"**
**F-26540 Mours Saint-Eusebe(FR)**

(74) Mandataire: **Weinstein, Zinovi et al,**
**Cabinet Z. WEINSTEIN 20, Avenue de Friedland**
**F-75008 Paris(FR)**

(54) **Dispositif de télécommande par câble d'un organe quelconque et véhicule équipé d'un tel dispositif.**

(57) Un dispositif de télécommande par câble est constitué d'un guipage (4) comportant au moins deux parties en saillie (5) qui s'étendent sensiblement radialement vers l'extérieur, de façon à permettre la retenue du guipage dans un support (6). Il s'applique par exemple à la commande du papillon chez gaz d'un carburateur de véhicule, ou à la commande d'un frein à main.

Fig. 1.

EP 0 023 183 A1

Croydon Printing Company Ltd.

-1-

<u>"Dispositif de télécommande par câble d'un organe
quelconque et véhicule équipé d'un tel dispositif"</u>

La présente invention a essentiellement pour objet un
dispositif de télécommande par câble d'un organe quelconque, et qui s'applique par exemple à la commande du
papillon des gaz d'un carburateur de véhicule, ou encore à la commande d'un frein à main.

On connaît depuis longtemps des dispositifs de télécommande par câble comprenant un câble susceptible de
coulisser dans une gaine tubulaire de réaction et
pouvant être revêtue extérieurement d'un guipage. Sur
cette gaine guipée ou non, il est également connu de
prévoir un ou des manchons cylindriques destinés à
reposer par contact sur un organe de support quelconque,
tel que par exemple une attache ou tout simplement un
orifice ménagé dans une tôle. Un tel manchon permet
avantageusement d'adapter le diamètre de la gaine
guipée ou non aux côtés de l'organe de support.

Toutefois, un dispositif de télécommande par câble du
type décrit précédemment présente des inconvénients.
En effet, lors des déplacements relatifs du manchon
cylindrique par rapport au support, il se crée un frottement prononcé du manchon sur l'organe de support,
provoquant dès lors une usure rapide du manchon. En
outre, l'emploi d'un manchon rapporté augmente le temps de fabrication du dispositif de télécommande et le rend fort coûteux.

La présente invention a pour but de remédier notamment aux inconvénients précités en proposant un dispositif de télécommande par câble qui est d'une structure très simple, est peu coûteux à fabriquer, et est d'une conception apte à bien résister aux phénomènes d'usure par frottement.

A cet effet, l'invention a pour objet un dispositif de télécommande par câble d'un organe quelconque, et du type comprenant un câble, un fil formant corde à piano, ou analogue, susceptible de coulisser dans une gaine tubulaire, caractérisé en ce que sur la périphérie de ladite gaine, sont prévues au moins deux parties en saillie qui s'étendent sensiblement radialement vers l'extérieur, de façon à permettre la retenue de la gaine dans un support.

On comprend déjà que les parties en saillie précitées constituent des surfaces de contact avec le support qui sont réduites au minimum et assurent un bon centrage tout en constituant des surfaces d'usure minimales.

Selon une autre caractéristique de l'invention, les parties en saillie constituent des ailettes radiales qui viennent de moulage soit avec la gaine, soit avec un guipage enveloppant la gaine.

On comprend ainsi que la structure du dispositif de télécommande par câble permet d'éviter l'emploi d'un ou de plusieurs manchons, et donc de faire l'économie de leur montage et de leur fixation. D'autre part, on peut augmenter la rigidité de la gaine, ce qui permet de ne pas déformer le câble dans la gaine, notamment lors de la pose du dispositif de télécommande sur un véhicule.

En outre, l'invention vise un véhicule équipé d'au moins un dispositif de télécommande par câble répondant aux caractéristiques susmentionnées.

D'autres caractéristiques et avantages de l'invention apparaîtront mieux dans la description détaillée qui suit et se réfère aux dessins annexés, donnés uniquement à titre d'exemple et dans lesquels :

La figure 1 est une vue en perspective avec arrachements partiels du dispositif de l'invention monté dans un organe de support.

La figure 2 est une vue en coupe selon la ligne II-II de la figure 1, selon un premier mode de réalisation; et

La figure 3 est une vue similaire à la figure 2 selon un second mode de réalisation.

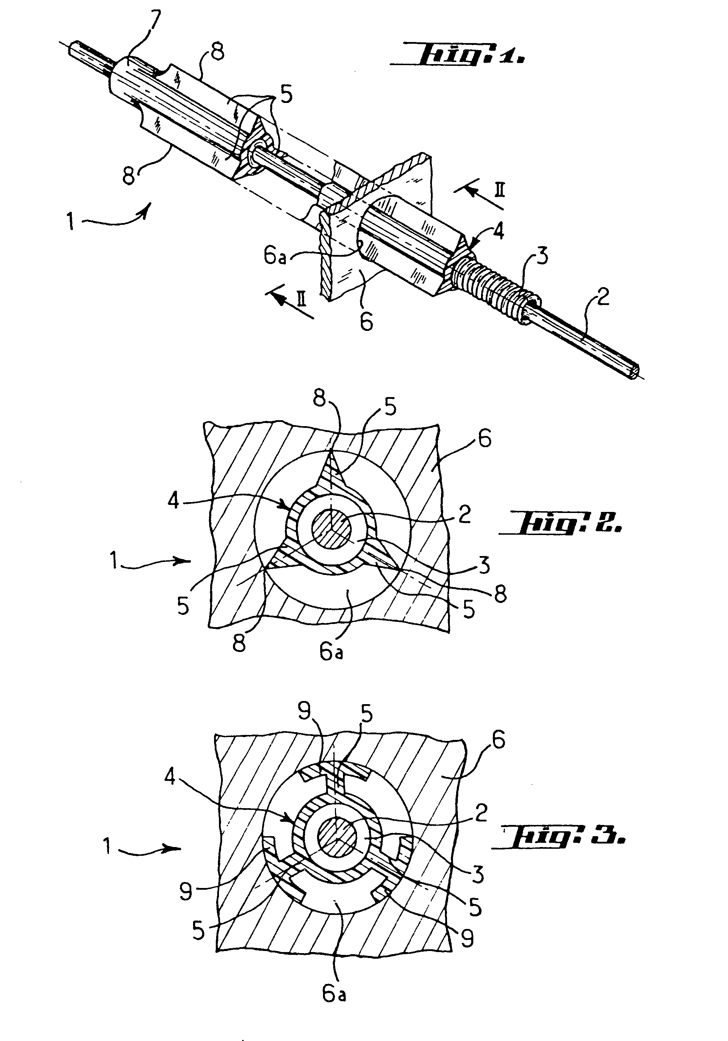

Suivant un exemple de réalisation, et en se reportant aux figures 1 et 2, un dispositif 1 de télécommande par câble d'un organe quelconque, conforme à l'invention, comprend un câble 2 susceptible de coulisser dans une gaine tubulaire de réaction 3 qui est par exemple constituée par un fil d'acier enroulé à spires jointives. On notera à ce propos que la gaine 3 pourrait tout aussi bien être réalisée en matière plastique sans sortir du cadre de l'invention.

La gaine 3 est revêtue extérieurement par un guipage 4 souple, réalisé en une matière synthétique. Ce

-4-

guipage 4 comporte, selon l'invention, des parties en saillie 5 qui s'étendent sensiblement radialement vers l'extérieur. Plus précisément, ces parties en saillie 5 constituent des ailettes radiales et sensiblement équidistantes qui s'étendent sur toute la longueur de la gaine 3, comme on le voit bien sur la figure 1.

Ainsi, sur les figures 1 et 2, on a représenté par exemple trois ailettes 5 qui font entre elles un angle sensiblement égal à 120°. Bien sûr, le nombre d'ailettes 5 n'est pas limitatif.

Comme il apparaît clairement sur les figures 1 et 2, les ailettes 5 viennent de moulage avec le guipage 4, c'est-à-dire que l'ensemble guipage-ailettes constitue une seule pièce. Ainsi, ces ailettes radiales 5 permettent la retenue du guipage 5 dans un support, tel que par exemple un orifice 6a pratiqué dans une tôle 6. C'est dire que seules les extrémités libres des ailettes 5 viennent en contact avec le bord de l'orifice 6a. Ainsi, on évite avantageusement l'usure du guipage par frottement de celui-ci contre la paroi dans laquelle est monté le guipage. A une extrémité 7 du guipage 4, une partie des ailettes 5 peut être découpée de façon à autoriser le montage d'un embout cylindrique (non représenté).

En se reportant à la figure 2, on voit mieux que les ailettes 5 présentent une forme triangulaire en section transversale, le sommet 8 de chaque triangle constituant la partie extérieure et de retenue du guipage 4 dans l'orifice 6a du support 6.

Selon le mode de réalisation de la figure 3, et dans laquelle les éléments identiques à ceux de la figure 2 sont désignés par le même repère, les ailettes 5, par exemple au nombre de trois et faisant entre elles un angle sensiblement égal à 120°, et venant de moulage avec le guipage 4, présentent une forme de T. La branche horizontale 9 de chaque T constitue ainsi une surface d'appui et de retenue du guipage 4 dans l'orifice 6a du support 6.

Par ailleurs, sans sortir du cadre de l'invention, on pourrait très bien prévoir des ailettes sans utiliser à proprement parler un guipage tel que 4. Dans ces conditions, les parties en saillie ou ailettes 5 viendraient directement de moulage avec la gaine 3, c'est-à-dire que l'ensemble gaine-ailettes constituerait une seule pièce. Comme dans le mode de réalisation représenté aux figures 1 à 3, les ailettes s'étendraient sensiblement radialement vers l'extérieur sur toute la longueur de la gaine 3. On n'a pas représenté un tel mode de réalisation, car il est aisément compréhensible à l'aide des figures 1 à 3.

Le dispositif de télécommande par câble selon l'invention est particulièrement simple et avantageux tant du point de vue coût de fabrication, que du point de vue de la bonne tenue en fonctionnement lorsqu'il est supporté par un organe quelconque.

Bien entendu, l'invention n'est nullement limitée aux modes de réalisation décrits et représentés et comprend tous les équivalents techniques des moyens décrits, ainsi que leurs combinaisons, si celles-ci sont effectuées suivant l'esprit de l'invention et mises en oeuvre dans le cadre des revendications qui suivent.

Revendications

1. Dispositif de télécommande par câble d'un organe quelconque, et du type comprenant un câble, un fil formant corde à piano, ou analogue, susceptible de coulisser dans une gaine tubulaire, muni, sur la périphérie de ladite gaine et s'étendant sur toute la longueur de ladite gaine, d'au moins deux parties en saillie, ou ailettes latérales, qui s'étendent sensiblement radialement vers l'extérieur, de façon à permettre la retenue de la gaine dans un support, caractérisé en ce que lesdites parties en saillie viennent de moulage avec un guipage souple, par exemple en matière synthétique, enveloppant ladite gaine.

2. Dispositif selon la revendication 1, caractérisé en ce que les parties en saillie ou ailettes précitées présentent une forme sensiblement triangulaire en section transversale, le sommet de chaque triangle constituant la partie extérieure et de retenue du dispositif dans le support précité.

3. Dispositif selon la revendication 1, caractérisé en ce que les parties en saillie ou ailettes précitées ont sensiblement une forme de T en section transversale, la branche horizontale de chaque T constituant la partie extérieure et de retenue du dispositif dans le support précité.

4. Dispositif de télécommande par câble d'un organe quelconque, et du type comprenant un câble, un fil formant corde à piano, ou analogue, susceptible de coulisser dans une gaine tubulaire, muni, sur la périphérie de ladite gaine et s'étendant sur toute la longueur de ladite gaine, d'au moins deux parties en saillie, ou ailettes latérales, qui s'étendent sensiblement radialement vers l'extérieur, de façon à permettre la retenue de la gaine dans un support, caractérisé en ce que
lesdites parties en saillie viennent de moulage avec
ladite gaine et présentent en section transversale,
soit une forme sensiblement triangulaire, soit sensiblement une forme de T, le sommet de chaque triangle
ou la branche horizontale de chaque T constituant la
partie extérieure et de retenue du dispositif dans le
support précité.

5. Véhicule caractérisé en ce qu'il est équipé d'au
moins un dispositif selon l'une des revendications
1 à 4.

*Fig. 1.*

*Fig. 2.*

*Fig. 3.*

**Office européen des brevets**

## RAPPORT DE RECHERCHE EUROPEENNE

| Catégorie | DOCUMENTS CONSIDERES COMME PERTINENTS | | CLASSEMENT DE LA DEMANDE (Int Cl ³) |
|---|---|---|---|
| | Citation du document avec indication en cas de besoin des parties pertinentes | Revendication concernée | |
| X | US - A - 3 126 757 (CADWALLADER)  * Document entier * | 1,4,5 | F 16 C 1/26 |
| | -- | | |
| X | US - A - 3 143 001 (CHISHOLM)  * Document entier * | 1,4 | |
| | -- | | |
| X | FR - A - 2 313 590 (MATSUSHITA)  * Pages 6,7; figures 4-7 * | 1,4 | |
| | -- | | DOMAINES TECHNIQUES RECHERCHES (Int Cl ³) |
| | FR - A - 1 479 145 (TELEFLEX INCORPORATED)  * Pages 4,5; figures 8,9 * | 1,2,4,5 | F 16 C 1/00 |
| | -- | | |
| A | FR - A - 1 178 569 (ETABLISSEMENTS JAEGER) | | |
| A | US - A - 3 390 589 (TSCHANZ) | | |
| A | FR - A - 2 154 230 (BOWDEN CONTROLS) | | |
| | ---- | | |

**CATEGORIE DES DOCUMENTS CITES**

X particulièrement pertinent
A arriere-plan technologique
O divulgation non-écrite
P document intercalaire
T théorie ou principe à la base de l'invention
E demande faisant interférence
D document cite dans la demande
L document cite pour d'autres raisons
& membre de la même famille document correspondant

Le présent rapport de recherche a été établi pour toutes les revendications

| Lieu de la recherche | Date d'achèvement de la recherche | Examinateur |
|---|---|---|
| La Haye | 17-09-1980 | BALDWIN |

OEB Form 1503.1  06.78